# EUROPEAN PATENT SPECIFICATION

(11) **EP 3 431 678 B1**
(45) Date of publication and mention of the grant of the patent: **13.05.2020**
(21) Application number: 18184171.9
(22) Date of filing: 18.07.2018
(51) Int. Cl.: E04F 10/06, E06B 9/46, B60J 1/20

(54) **SCREEN DEVICE**
ABSCHIRMVORRICHTUNG
DISPOSITIF D'ECRAN

(30) Priority: 19.07.2017 BE 201705513
(43) Date of publication of application: 23.01.2019
(73) Proprietor: Renson Sunprotection Screens NV, 8790 Waregem (BE)
(72) Inventor: MEINSTER, John Peter, 9050 GENTBRUGGE (BE); SOLOMANIUCK, Maxim Gustave, 9000 GENT (BE); CORTVRIENDT, Louis Jonas, 8400 OOSTENDE (BE); VANHOUTTE, Steven Rita André, 8540 Deerlijk (BE); RUMBAUT, Sofie, 9000 GENT (BE); MAERTENS, Jonas Willem, 9000 GENT (BE); PERQUY, Patrick Marc, 9031 DRONGEN (BE); VERFAILLIE, Koen, 8800 RUMBEKE (BE)
(74) Representative: Hostens, Veerle

(56) References cited:
- JP-A- H1 181 827
- JP-A- 2000 045 658
- JP-A- 2015 063 885
- NL-C2- 1 031 433

## Description

This invention relates to a screen device, comprising a screen, which on a screen edge is provided with a click profile, and a screen tube, for the rolling-up and of the screen hereon, which screen tube in its peripheral surface is provided with a mounting slot into which the click profile of the screen is clickable.

According to a traditional fastening, screens are fastened to a screen tube by sliding a screen edge thereof, which for this purpose, for example, is provided with a thickening, laterally into a mounting slot in the screen tube. Variants of such fastenings are described, for example, in NL 1 031 433 C and in FR 2 091 507 A5. In such fastenings, the screen tube needs to be demounted in order to be able to fasten the screen to the screen tube and the necessary space next to the screen tube needs to be free when the screen edge is slid into the mounting slot.

With the aid of a click connection comprising such a click profile, a screen can be fastened to a screen tube in a simple manner without the screen tube itself needing to be removed for this purpose, and without the necessary space in the extension of the screen tube needing to be provided for this purpose.
The mounting slot in the screen tube is herein typically of one-piece design, but can also be of multipart design, as is the case, for example, in the screen tube from US 5,384,941 A, or the screen tube from WO 2012/128295 A1, or the screen tube in Figure 2 from JP H03 48092 U.
In the screen devices from US 5,384,941 A, WO 2012/128295 A1, JP H07 15997 U and Figure 3 from JP H03 48092 U, the screen is fitted around the click profile in order to fasten the screen to the screen tube. This makes the crease-free fastening of the screen to the screen tube more difficult.
In a screen device to which this invention relates, the click profile is provided on the screen without having to wrap the screen around the click profile, so that the screen can be kept nicely flat when the click profile is fitted into the mounting slot in the screen tube. Screen devices of this type are known, for example, from AT 008 775 U1, US 2010/0307694 A1, BE 1 019 450 A3, JP H11 81827 A, JP 2000-45658 A and JP H03 48092 U.

With the screen device from BE 1 019 450 A3, a solution has already been sought for the known problem of creasing of such a screen when the screen is rolled up and unrolled on the screen tube. Thickenings of the screen and the click profile are herein confined as much as possible to outside the circumference of the screen tube in order to avoid this creasing of the screen. The proposed flags which are provided for this purpose on the click profile limit the bumps in the screen when it is rolled up and unrolled, but still form a fairly sudden transition outside the screen tube, so that significant bumps still arise.

The object of this invention is to provide such a screen device in which the screen is easily fastenable to the screen tube, with compact means, not easily getting loose when the screen is rolled up and unrolled and in which creasing in the screen when it is rolled up and unrolled is further limited.

This object of the invention is achieved by providing a screen device, comprising
- a screen, which on a screen edge is provided with a click profile;
- a screen tube, for the rolling up and unrolling of the screen hereon, which screen tube in its peripheral surface is provided with a mounting slot into which the click profile of the screen is clickable;
wherein the screen, on the screen edge, is provided with a mounting element, wherein a screen seam is formed, wherein the click profile is provided with a mounting slot for the at least partial reception of the mounting element herein in order to provide the screen edge with this click profile, wherein the click profile comprises an access opening to the mounting slot in this click profile, wherein the screen and/or the mounting element, in the mounted state, extends through this access opening, wherein the click profile is provided to, after having been clicked in place, be fully accommodated in the mounting slot in the screen tube, and wherein the click profile comprises a curved outer surface in order to at least partially complete the peripheral surface of the screen tube, wherein this outer surface of the click profile, in the mounted state, is facing away from the screen tube, wherein the mounting slot in the click profile opens with its access opening into this outer surface, wherein the mounting slot in the screen tube is provided, on both sides of an access opening to this mounting slot, with an undercut in which the click profile engages for clicking of this click profile into this mounting slot, wherein the click profile comprises a mounting leg, designed as a rigid hook element, which, when the click profile is clicked in place, engages in a first undercut of the said undercuts, and comprises an elastically displaceable click leg, which when the click profile is clicked in place, engages in a second undercut of the said undercuts and wherein a recess is provided in this outer surface of the click profile, adjacent to the access opening, for the reception of the screen seam herein, the recess extending on one side of the mounting slot in the click profile, the mounting leg being disposed on this side of the click profile and the click leg being disposed on the other side.

On this other side, it is easier to provide the click profile, within a limited depth for the mounting slot, with a click leg. By arranging the mounting leg and the click leg in this way relative to the mounting slot and the recess, the click connection cannot easily work loose when the screen is rolled up and unrolled.

By now fully accommodating the click profile in the mounting slot, wherein the said outer surface thereof at least partially completes the peripheral surface of the screen tube, and by accommodating the screen seam in the recess of the click profile, all transitions between the screen, the screen seam and the screen tube can be realized smoothly, without sudden transitions. In this way, the formation of bumps in the screen when it is rolled up and unrolled is reduced to a minimum.

Such a recess can be realized in a relatively simple manner in a click profile of this type.

The mounting slot in the screen tube can herein assume a simple form in order to be able to receive the click profile herein.
As is further illustrated also in more specific embodiments, the mounting slot can herein also be designed much less deep than in the known such solutions. This offers the advantage that, in such a screen tube, much more useful space can be left. Such a screen tube is namely typically of hollow design, wherein tube plugs, with screen shafts and possibly a tube motor at the ends of this screen tube, are fastened in this cavity in order to be able to fasten the screen tube rotatably about these screen shafts. The larger the cavity, the more easily can the screen plugs be fitted herein and the larger can be a possible tube motor.

The click profile is preferably provided over almost the full length of the screen edge in order to obtain a fastening of the screen to the screen tube that is as uniform as possible, this without creasing of the screen. Such a click profile can be produced, for example, by extrusion.

By peripheral surface of the screen tube is denoted that outer surface of the screen tube against which the screen bears in the rolled-up state. This outer surface of the screen tube is interrupted by the mounting slot. After the click profile has been clicked into the mounting slot in the screen tube, the said curved outer surface of this click profile at least partially completes this peripheral surface. Preferably, the screen seam, when this screen seam is received in the recess, completes this peripheral surface still further. The screen tube itself, the said outer surface of the click profile, and the screen seam itself then together preferably form an almost complete peripheral surface.

After the click profile has been clicked into the mounting slot in the screen tube, this screen seam, when the said screen seam is received in the recess, further preferably extends substantially in line with the peripheral surface of the screen tube. In this way, it is easier to construct the click profile such that the mounting slot in the screen tube can have a limited depth.

The mounting slot can be realized, for example, in substantially dovetailed design.

The click leg can be designed, for example, to be at least partially elastic, in order to make it elastically displaceable. For this purpose, this click leg can also be connected with a thinned, elastic connecting part to the rest of the click profile. This click leg can possibly be produced by coextrusion.

The width of the access opening to the mounting slot in the screen tube is preferably greater than the depth of this mounting slot. In this way, given a limited depth of the mounting slot, sufficient space can easily be provided for the reception of the screen seam within the mounting slot.

The mounting slot in the screen tube is, further preferably, symmetrical in structure, so that the click profile can be fitted in the mounting slot independently of direction.

The mounting element which is provided on the screen edge can assume many forms, including, for example, a widening of the said screen edge, such as, for example, a slat or a cord which is fastened to the screen, or is fitted in a hollow edge of the screen.
If, for example, a cord is fitted in a hollow edge of the screen, then this hollow edge of the screen forms the said screen seam.
Preferably, the mounting element is welded to the screen edge, with a weld seam as the screen seam, so that the screen can be fastened to the screen tube more easily without creasing. More specifically, such a mounting element, for example, can be provided in the form of a half zip, which can be welded to the screen in a known manner. Such a half zip is often already provided on the lateral sides of a screen of this type, for the guidance of the screen in lateral guides. From a production engineering viewpoint, it is then relatively simple to likewise provide this same screen with such a half zip on a third screen edge, now for the fastening of this screen to the screen tube. The screen tube preferably has a substantially circular cross section, since it is easier to fix tube plugs, and possibly a tube motor, in such a screen tube with round shape. In a screen tube having a substantially circular cross section, the said outer surface of the click profile is in cross section preferably a circular arc having the same radius as the radius of the peripheral surface of the screen tube.

The click profile is preferably releasably clickable into the mounting slot in the screen tube, so that a screen of such a screen device can be easily replaced.

This invention is now explained more closely on the basis of the hereinafter following detailed description of some preferred screen devices according to this invention. The aim of this description is solely to provide illustrative examples and to indicate further advantages and particularities of this invention.

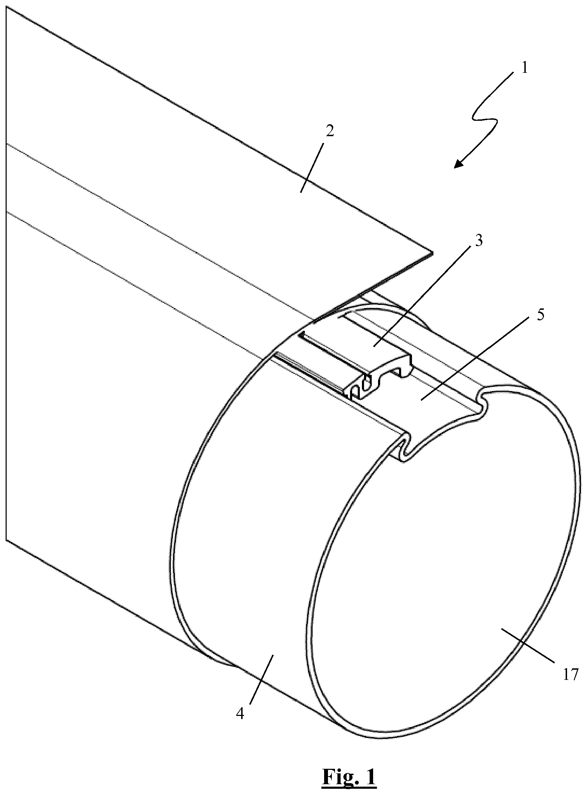

In this detailed description, reference is made by means of reference numerals to the accompanying drawings, wherein in
- Figure 1 a part of a screen device according to this invention is represented in perspective view;

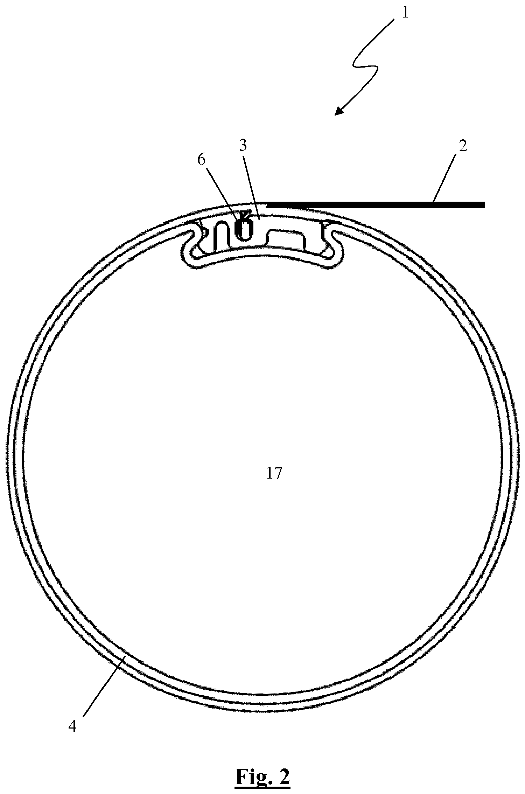

- Figure 2 a part of the screen device from Figure 1 is represented in side view;

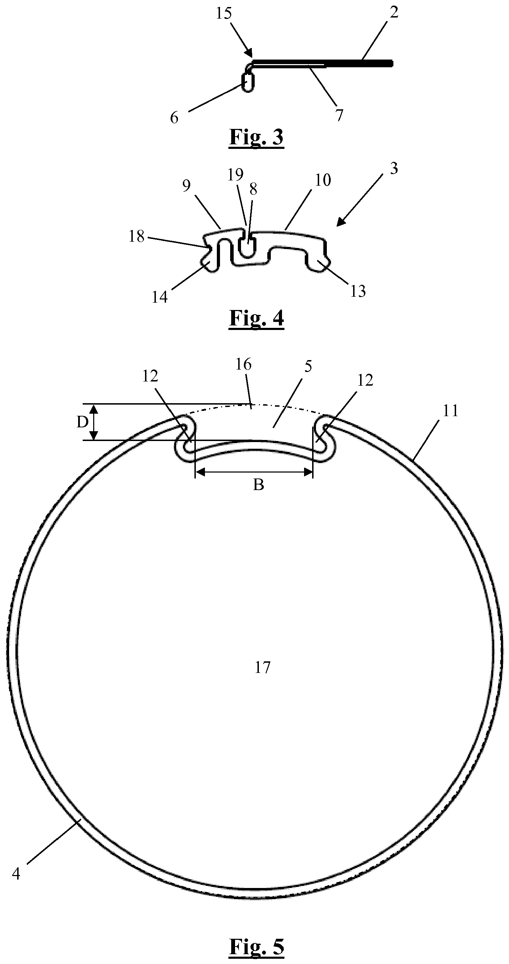

- Figure 3 a part of the screen from the screen device from Figure 1 is represented in side view;
- Figure 4 the click profile of the screen device from Figure 1 is represented in side view;
- Figure 5 the screen tube of the screen device from Figure 1 is represented in side view.

The depicted screen device (1) comprises a screen (2) and a screen tube (4) on which this screen (2) can be rolled up and unrolled.
On the other side of the screen (2) from the side where this screen (2) can be rolled up and unrolled on the screen tube (4), a screen slat can possibly be fastened. Such a screen device (1) can further comprise on both lateral sides a guide for guiding the lateral sides of the screen (2) and/or a screen slat during the roll-up and unrolling movement of the screen (2).
In order to roll up and unroll the screen (2), the screen tube (4) is fastened rotatably. For this purpose, the screen tube (4) is of hollow design. At the ends of the screen tube (4), tube plugs are fitted in the cavity (17), which tube plugs are provided with a shaft piece that can be rotatably fastened in, for example, a screen box, so that the screen tube (4) is rotatable about these shaft pieces. The screen tube (4) can be rotated manually, or can be driven with the aid of a motor. As the motor, a tube motor can be provided in the screen tube (4).

On the side on which the screen (2) is fastened to the screen tube (4), the screen edge (15) is provided with a thickening as the mounting element (6), which is designed, for example, as a half zip (6). In the depicted embodiment, this mounting element (6) is welded to the screen (2) in a known manner with a weld seam (7).
The mounting element (6) is enclosed in a mounting slot (8) of a click profile (3), this by sliding the click profile (3), for example in advance, during production of the screen (2), over this mounting element (6), or by clicking the mounting element (6) into the click profile (3). If the mounting element (6) is clickable into the click profile (3), the further fastening of the click profile (3) in the screen device (1) preferably prevents the mounting element (6) from disengaging from the click profile (3).
In the mounted state, the mounting element (6) extends, in the depicted embodiment, through an access opening (19) to the mounting slot (8) in the click profile (3).

The screen tube (4) is provided with a mounting slot (5), having an access opening (16) through which the click profile (3) can be clicked into the mounting slot (5). On both sides of the access opening (16), this mounting slot (5) is provided with an undercut (12), in which the click profile (3) engages in order to click in place.
The depicted mounting slot (5) in the screen tube (4) is of substantially dovetailed design. The width (B) of the access opening (16) to this mounting slot (5) is greater than the depth (D) of this mounting slot (5).
This mounting slot (5) is symmetrical in structure, so that the click profile (3) can be clicked into this mounting slot (5) independently of direction.

The click profile (3) comprises a rigid mounting leg (13) and an elastically displaceable click leg (14). The click leg (14) is connected with the aid of a constriction (18) to the rest of the click profile (3) in order to make this click leg (14) elastically displaceable.
When the click profile (3) is clicked in place, the mounting leg (13) hooks into a first undercut (12) of the said undercuts (12) and displaces the click leg (14) elastically so as to engage in a second undercut (12) of the said undercuts (12).
On that side of the mounting slot (8) in the click profile (3) where the click leg (14) is provided, the click profile (3) comprises a curved outer surface (9). After the click profile (3) has been clicked into the mounting slot (5) of the screen tube (4), this curved outer surface (9) extends in the extension of the outer surface (11) of the screen tube (4).
On that side of the mounting slot (8) in the click profile (3) where the mounting leg (13) is provided, the click profile (3) comprises a recess (10), for the reception of the weld seam (7) herein. After the click profile (3) has been clicked into the mounting slot (5) of the screen tube (4) and after the weld seam (7) has been received in this recess (10), the weld seam (7) extends substantially in the extension of the outer surface (11) of the screen tube (4), so that this weld seam (7), together with the curved outer surface (11) of the screen tube (4), completes the peripheral surface (11) thereof. When the screen (2) is rolled up and unrolled, the click profile (3) cannot easily work loose from the mounting slot (8). The click profile (3) can though deliberately be disengaged from this mounting slot (8).
Thet click profile (3) can be produced from plastic, for example by extrusion. This click profile (3) extends preferably over almost the full length of the screen edge (15).

The screen tube (4) has a substantially circular cross section. The cylindrical peripheral surface (11) of the screen tube (4) is only interrupted by the mounting slot (5). Together with a click profile (3) clicked in place herein and a weld seam (7) accommodated herein, an almost complete cylindrical peripheral surface is obtained, on which the screen (2) can be rolled up and unrolled with almost no creasing.

## Claims

1. Screen device (1), comprising
- a screen (2), which on a screen edge (15) is provided with a click profile (3);
- a screen tube (4), for the rolling up and unrolling of the screen (2) hereon, which screen tube in its peripheral surface (11) is provided with a mounting slot (5) into which the click profile (3) of the screen (2) is clickable;
wherein the screen (2), on the screen edge (15), is provided with a mounting element (6), wherein a screen seam (7) is formed, wherein the click profile (3) is provided with a mounting slot (8) for the at least partial reception of the mounting element (6) herein in order to provide the screen edge (15) with this click profile (3), wherein the click profile (3) comprises an access opening (19) to the mounting slot (8) in this click profile (3), wherein the screen (2) and/or the mounting element (6), in the mounted state, extends through this access opening (19), wherein the click profile (3) is provided to, after having been clicked in place, be fully accommodated in the mounting slot (5) in the screen tube (4), and wherein the click profile (3) comprises a curved outer surface (9) in order to at least partially complete the peripheral surface (11) of the screen tube (4), wherein this outer surface (9) of the click profile (3), in the mounted state, is facing away from the screen tube (4), wherein the mounting slot (8) in the click profile (3) opens with its access opening (19) into this outer surface (9), **characterised in that** the mounting slot (5) in the screen tube (4) is provided, on both sides of an access opening (16) to this mounting slot (5), with an undercut (12) in which the click profile (3) engages for the clicking of this click profile (3) into this mounting slot (5), wherein the click profile (3) comprises a mounting leg (13), designed as a rigid hook element, which, when the click profile (3) is clicked in place, engages in a first undercut (12) of the said undercuts (12), and comprises an elastically displaceable click leg (14), which, when the click profile (3) is clicked in place, engages in a second undercut (12) of the said undercuts (12) and **in that** a recess (10) is provided in the outer surface (9) of the click profile (3), adjacent to the access opening (19), for the reception of the screen seam (7) herein, the recess (10) extending on one side of the mounting slot (8) in the click profile (3), the mounting leg (13) being disposed on this side of the click profile (3) and the click leg (14) being disposed on the other side.

2. Screen device (1) according to Claim 1, **characterized in that**, after the click profile (3) has been clicked into the mounting slot (5) in the screen tube (4), when the screen seam (7) is received in the recess (10), this screen seam (7) at least partially completes the peripheral surface (11) of the screen tube (4).

3. Screen device (1) according to Claim 2, **characterized in that**, after the click profile (3) has been clicked into the mounting slot (5) in the screen tube (4), this screen seam (7), when the said screen seam (7) is received in the recess (10), extends substantially in line with the peripheral surface (11) of the screen tube (4).

4. Screen device (1) according to one of the preceding claims, **characterized in that** the width (B) of the access opening (16) to the mounting slot (5) in the screen tube (4) is greater than the depth (D) of this mounting slot (5).

5. Screen device (1) according to one of the preceding claims, **characterized in that** the mounting slot (5) in the screen tube (4) is symmetrical in structure.

6. Screen device (1) according to one of the preceding claims, **characterized in that** the mounting element (6) is welded to the screen edge (15), with a weld seam (7) as the screen seam (7).

7. Screen device (1) according to one of the preceding claims, **characterized in that** the screen tube (4) has a substantially circular cross section.

8. Screen device (1) according to Claim 7, **characterized in that** the said outer surface (9) of the click profile (3) next to the recess (10) in the click profile (3) is in cross section a circular arc having the same radius as the radius of the peripheral surface (11) of the screen tube (4).

9. Screen device (1) according to one of the preceding claims, **characterized in that** the click profile (3) is releasably clickable into the mounting slot (5) in the screen tube (4).

## Patentansprüche

1. Abschirmvorrichtung (1), umfassend
- eine Abschirmung (2), die an einem Abschirmungsrand (15) mit einem Rastprofil (3) versehen ist,
- ein Abschirmrohr (4), um die Abschirmung (2) auf demselben aufzurollen und von demselben abzurollen, wobei das Abschirmrohr in seiner Umfangsfläche (11) mit einem Befestigungsschlitz (5) versehen ist, in den das Rastprofil (3) der Abschirmung (2) einrastbar ist,
wobei die Abschirmung (2) an dem Abschirmungsrand (15) mit einem Befestigungselement (6) versehen ist, wobei eine Abschirmungsnaht (7) ausgebildet ist, wobei das Rastprofil (3) mit einem Befestigungsschlitz (8) zum wenigstens teilweisen Aufnehmen des Befestigungselements (6) in demselben versehen ist, um den Abschirmungsrand (15) mit diesem Rastprofil (3) zu versehen, wobei das Rastprofil (3) eine Zugangsöffnung (19) zu dem Befestigungsschlitz (8) in diesem Rastprofil (3) umfasst, wobei sich die Abschirmung (2) und/oder das Befestigungselement (6) im befestigten Zustand durch diese Zugangsöffnung (19) erstrecken bzw. erstreckt, wobei
das Rastprofil (3), nachdem es eingerastet worden ist, dazu vorgesehen ist, vollständig in dem Befestigungsschlitz (5) in dem Abschirmrohr (4) untergebracht zu sein, und wobei das Rastprofil (3) eine gekrümmte Außenfläche (9) umfasst, um die Umfangsfläche (11) des Abschirmrohrs (4) wenigstens zum Teil zu vervollständigen, wobei diese Außenfläche (9) des Rastprofils (3) im befestigten Zustand von dem Abschirmrohr (4) abgewandt ist, wobei sich der Befestigungsschlitz (8) in dem Rastprofil (3) mit seiner Zugangsöffnung (19) in diese Außenfläche (9) öffnet, **dadurch gekennzeichnet, dass** der Befestigungsschlitz (5) in dem Abschirmrohr (4) auf beiden Seiten einer Zugangsöffnung (16) zu diesem Befestigungsschlitz (5) mit einem Hinterschnitt (12) versehen ist, in den das Rastprofil (3) eingreift, um dieses Rastprofil (3) in diesen Befestigungsschlitz (5) einzurasten, wobei das Rastprofil (3) einen Befestigungsschenkel (13), der als starres Hakenelement ausgeführt ist, das, wenn das Rastprofil (3) eingerastet ist, in einen ersten Hinterschnitt (12) der Hinterschnitte (12) eingreift, und einen elastisch verstellbaren Rastschenkel (14), der, wenn das Rastprofil (3) eingerastet ist, in einen zweiten Hinterschnitt (12) der Hinterschnitte (12) eingreift, umfasst, und dass eine an die Zugangsöffnung (19) angrenzende Ausnehmung (10) in der Außenfläche (9) des Rastprofils (3) vorgesehen ist, um die Abschirmungsnaht (7) in derselben aufzunehmen, wobei sich die Ausnehmung (10) auf einer Seite des Befestigungsschlitzes (8) in dem Rastprofil (3) erstreckt, wobei der Befestigungsschenkel (13) auf dieser Seite des Rastprofils (3) angeordnet ist und der Rastschenkel (14) auf der anderen Seite angeordnet ist.

2. Abschirmvorrichtung (1) nach Anspruch 1, **dadurch gekennzeichnet, dass**, nachdem das Rastprofil (3) in den Befestigungsschlitz (5) in dem Abschirmrohr (4) eingerastet worden ist, wenn die Abschirmungsnaht (7) in der Ausnehmung (10) aufgenommen ist, diese Abschirmungsnaht (7) wenigstens zum Teil die Umfangsfläche (11) des Abschirmrohrs (4) vervollständigt.

3. Abschirmvorrichtung (1) nach Anspruch 2, **dadurch gekennzeichnet, dass**, nachdem das Rastprofil (3) in den Befestigungsschlitz (5) in dem Abschirmrohr (4) eingerastet worden ist, sich diese Abschirmungsnaht (7), wenn die Abschirmungsnaht (7) in der Ausnehmung (10) aufgenommen ist, im Wesentlichen in einer Linie mit der Umfangsfläche (11) des Abschirmrohrs (4) erstreckt.

4. Abschirmvorrichtung (1) nach einem der vorhergehenden Ansprüche, **dadurch gekennzeichnet, dass** die Breite (B) der Zugangsöffnung (16) zu dem Befestigungsschlitz (5) in dem Abschirmrohr (4) größer als die Tiefe (D) dieses Befestigungsschlitzes (5) ist.

5. Abschirmvorrichtung (1) nach einem der vorhergehenden Ansprüche, **dadurch gekennzeichnet, dass** der Befestigungsschlitz (5) in dem Abschirmrohr (4) symmetrisch im Aufbau ist.

6. Abschirmvorrichtung (1) nach einem der vorhergehenden Ansprüche, **dadurch gekennzeichnet, dass** das Befestigungselement (6) mit einer Schweißnaht (7) als Abschirmungsnaht (7) an dem Abschirmungsrand (15) angeschweißt ist.

7. Abschirmvorrichtung (1) nach einem der vorhergehenden Ansprüche, **dadurch gekennzeichnet, dass** das Abschirmrohr (4) einen im Wesentlichen kreisförmigen Querschnitt aufweist.

8. Abschirmvorrichtung (1) nach Anspruch 7, **dadurch gekennzeichnet, dass** die Außenfläche (9) des Rastprofils (3) neben der Ausnehmung (10) in dem Rastprofil (3) im Querschnitt ein Kreisbogen ist, der den gleichen Radius wie der Radius der Umfangsfläche (11) des Abschirmrohrs (4) aufweist.

9. Abschirmvorrichtung (1) nach einem der vorhergehenden Ansprüche, **dadurch gekennzeichnet, dass** das Rastprofil (3) auf lösbare Weise in den Befestigungsschlitz (5) in dem Abschirmrohr (4) einrastbar ist.

## Revendications

1. Dispositif d'écran (1), comprenant
- un écran (2) muni d'un profilé à encliqueter (3) sur un bord de l'écran (15) ;
- un tube d'écran (4), destiné à enrouler et à dérouler l'écran (2) sur celui-ci, lequel tube d'écran est muni dans sa surface périphérique (11) d'une fente de montage (5) dans laquelle le profilé à encliqueter (3) de l'écran (2) peut être encliqueté ;
dans lequel l'écran (2) est muni d'un élément de montage (6) sur le bord de l'écran (15), dans lequel est formée une soudure d'écran (7), dans lequel le profilé à encliqueter (3) est muni d'une fente de montage (8) pour la réception au moins partielle de l'élément de montage (6) dans celle-ci afin de munir le bord de l'écran (15) de ce profilé à encliqueter (3), dans lequel le profilé à encliqueter (3) comprend une ouverture d'accès (19) à la fente de montage (8) dans ce profilé à encliqueter (3), dans lequel l'écran (2) et/ou l'élément de montage (6), à l'état monté, s'étend(ent) à travers cette ouverture d'accès (19), dans lequel le profilé à encliqueter (3), après avoir été encliqueté, est prévu pour être complètement logé dans la fente de montage (5) dans le tube d'écran (4), et dans lequel le profilé à encliqueter (3) comprend une surface extérieure incurvée (9) afin de compléter au moins partiellement la surface périphérique (11) du tube d'écran (4), dans lequel cette surface extérieure (9) du profilé à encliqueter (3), à l'état monté, est détournée du tube d'écran (4), dans lequel la fente de montage (8) dans le profilé à encliqueter (3) s'ouvre avec son ouverture d'accès (19) dans cette surface extérieure (9), **caractérisé en ce que** la fente de montage (5) dans le tube d'écran (4) est munie, des deux côtés d'une ouverture d'accès (16) à cette fente de montage (5), d'une contre-dépouille (12) dans laquelle le profilé à encliqueter (3) vient en prise pour l'encliquetage de ce profilé à encliqueter (3) dans cette fente de montage (5), dans lequel le profilé à encliqueter (3) comprend une patte de montage (13), conçue sous forme d'élément formant crochet rigide, qui, lorsque le profilé à encliqueter (3) est encliqueté, vient en prise dans une première contre-dépouille (12) desdites contre-dépouilles (12), et comprend une patte à encliqueter (14) pouvant être déplacée élastiquement, qui, lorsque le profilé à encliqueter (3) est encliqueté, vient en prise dans une deuxième contre-dépouille (12) desdites contre-dépouilles (12), et **en ce qu'**un retrait (10) est prévu dans la surface extérieure (9) du profilé à encliqueter (3), adjacent à l'ouverture d'accès (19), pour la réception de la soudure d'écran (7) dans celui-ci, le retrait (10) s'étendant d'un côté de la fente de montage (8) dans le profilé à encliqueter (3), la patte de montage (13) étant disposée de ce côté du profilé à encliqueter (3) et la patte à encliqueter (14) étant disposée de l'autre côté.

2. Dispositif d'écran (1) selon la revendication 1, **caractérisé en ce qu'**après que le profilé à encliqueter (3) a été encliqueté dans la fente de montage (5) dans le tube d'écran (4), lorsque la soudure d'écran (7) est reçue dans le retrait (10), cette soudure d'écran (7) complète au moins partiellement la surface périphérique (11) du tube d'écran (4).

3. Dispositif d'écran (1) selon la revendication 2, **caractérisé en ce qu'**après que le profilé à encliqueter (3) a été encliqueté dans la fente de montage (5) dans le tube d'écran (4), cette soudure d'écran (7), lorsque ladite soudure d'écran (7) est reçue dans le retrait (10), s'étend substantiellement en ligne avec la surface périphérique (11) du tube d'écran (4).

4. Dispositif d'écran (1) selon l'une quelconque des revendications précédentes, **caractérisé en ce que** la largeur (B) de l'ouverture d'accès (16) à la fente de montage (5) dans le tube d'écran (4) est supérieure à la profondeur (D) de cette fente de montage (5).

5. Dispositif d'écran (1) selon l'une quelconque des revendications précédentes, **caractérisé en ce que** la fente de montage (5) dans le tube d'écran (4) est de structure symétrique.

6. Dispositif d'écran (1) selon l'une quelconque des revendications précédentes, **caractérisé en ce que** l'élément de montage (6) est soudé au bord d'écran (15), avec un cordon de soudure (7) comme soudure d'écran (7).

7. Dispositif d'écran (1) selon l'une quelconque des revendications précédentes, **caractérisé en ce que** le tube d'écran (4) présente une section transversale substantiellement circulaire.

8. Dispositif d'écran (1) selon la revendication 7, **caractérisé en ce que** ladite surface extérieure (9) du profilé à encliqueter (3) près du retrait (10) dans le profilé à encliqueter (3) présente une section transversale en arc de cercle ayant le même rayon que le rayon de la surface périphérique (11) du tube d'écran (4).

9. Dispositif d'écran (1) selon l'une quelconque des revendications précédentes, **caractérisé en ce que** le profilé à encliqueter (3) peut être encliqueté de manière amovible dans la fente de montage (5) dans le tube d'écran (4).
